# EUROPÄISCHE PATENTSCHRIFT

(11) **EP 0 893 633 B1**
(45) Veröffentlichungstag und Bekanntmachung des Hinweises auf die Patenterteilung: **02.07.2003**
(21) Anmeldenummer: 98107277.0
(22) Anmeldetag: 21.04.1998
(51) Int. Cl.: F16K 17/04

(54) **Sicherheitsventil für die Hochdruckhydraulik**
Safety valve for high-pressure hydraulics
Soupape de sûreté pour la hydraulique à haute pression

(30) Priorität: 25.07.1997 DE 29713295 U
(43) Veröffentlichungstag der Anmeldung: 27.01.1999
(73) Patentinhaber: HAWE Hydraulik GmbH & Co. KG, 81673 München (DE)
(72) Erfinder: Henschel, Werner, 81243 München (DE)
(74) Vertreter: Grünecker, Kinkeldey, Stockmair & Schwanhäusser Anwaltssozietät

(56) Entgegenhaltungen:
- DE-A- 4 342 833
- FR-A- 1 049 077
- FR-A- 2 192 678
- GB-A- 176 037
- GB-A- 1 003 001

## Beschreibung

Die Erfindung betrifft ein Sicherheitsventil gemäß Oberbegriff von Anspruch 1.

Derartige Sitzventile werden in der Praxis in vielen Ausführungen als direkte Sicherheitsventile verwendet, die sich durch rasches und zuverlässiges Ansprechverhalten auszeichnen. Ein Anwendungsfall für ein solches Sicherheitsventil ist die Steuerung einer Feuerwehrleiter, die beim Ausfahren, Schwenken, Aufstellen oder Senken mit konstanter Geschwindigkeit zu bewegen ist, weil Geschwindigkeitsänderungen gefährlich oder zumindest störend sind. Das direkte Sicherheitsventil überwacht beispielsweise zwischen einem Systemdruck von 200 bar und einem Ablaufdruck von nur 5 bar eine bestimmte Druckgrenze. Kann je nach Öffnungsgrad des Sicherheitsventils Druckmittel frei abströmen, dann kann die eingestellte Druckgrenze wegen der sich unvermeidbar über den Hub ändernden Kennlinie der das Schließelement belastenden Feder bei variierender Menge nicht gleichmäßig gehalten werden. Um diesen Nachteil zu mildern, ist es in der Praxis bekannt, an der Abströmseite des Sicherheitsventils das mit einer Ringnut ausgestattete Auftreffglied vorzusehen, damit die Ringnut das austretende Druckmittel umlenkt. Aus Strömungsimpulsen des Druckmittels ergeben sich dann Ausgleichskräfte, die die Änderung der Federkraft über deren Hub kompensieren sollen, damit die eingestellte Druckgrenze annähernd gehalten wird. Die Querschnittskontur der Ringnut ist entweder bogen- oder trapezförmig. Der Effekt des Auftreffgliedes mit der Ringnut führt zwar zu einer spürbaren Verbesserung des Ansprechverhaltens des Sicherheitsventils im Vergleich zu einem Sicherheitsventil ohne Auftreffglied. Jedoch treten nach wie vor Schwankungen der eingestellten Druckgrenze über der Menge auf, die bei strikten Anforderungen nicht tolerierbar sind, z.B. bei einer Feuerwehrleiter.

Bei einem aus FR-A-2 192 678 bekannten Druckbegrenzungsventil gemäß Oberbegriff des Patentanspruchs 1 sitzt auf dem Kopf des Schließelementes eine schüsselförmige Ringfeder, die mit dem Endflansch des Schließelementes eine im Querschnitt trapezförmige Prallfläche definiert. Durch Ändern der Schließfederkraft läßt sich die Ringfeder mehr oder weniger verformen, um den Querschnitt der Hohlkehle zu variieren.

Bei einem Sicherheitsventil gemäß FR-B-1 049 077 weist das Schließelement eine eine Abdicht-Ringkante umgebende, konkav mit gleichmäßigem Querschnittsverlauf gekrümmte Prallfläche auf, deren offene Seite von der Achse des Schließelementes weg orientiert ist. Das Druckmittel tritt seitlich aus und überträgt keine nennenswerte Axialkomponente auf die Prallfläche.

Bei einem aus GB-B-176 037 bekannten Sicherheitsventil sitzt das Schließelement mit einer radialen Kreisringfläche auf einem kreisringförmigen Ventilsitz, so daß das Druckmittel beim Öffnen des Ventils seitlich abströmt. Im Querschnitt V-förmige, gerundete oder sägezahnartige Strömungsflächen außerhalb des Ventilsitzes dienen zur Strömungsführung.

Weiterer Stand der Technik ist enthalten in DE-A-43 42 833.

Der Erfindung liegt die Aufgabe zugrunde, ein Sicherheitsventil der eingangs genannten Art zu schaffen, mit dem baulich einfach und kostengünstig der eingestellte Druck mengenunabhängig konstant gehalten werden kann.

Die gestellte Aufgabe wird mit den Merkmalen des Anspruchs 1 gelöst.

Das beim Öffnen des Sicherheitsventils austretende Druckmittel verändert seinen Austrittswinkel in Relation zur Achse des Schließelementes in Abhängigkeit vom Öffnungsgrad des Sicherheitsventils. Bei kleinem Öffnungsgrad ist der Austrittswinkel verschieden vom Austrittswinkel bei großem Öffnungsgrad. Auf diese Veränderung des Austrittswinkels sind die unterschiedlich orientierten mehreren Prallflächen abgestimmt, aus denen die Querschnittskontur der Ringnut zusammengesetzt ist. Das Druckmittel trifft bei zunehmendem oder abnehmendem Öffnungsgrad des Sicherheitsventils nacheinander auf die Prallflächen, damit es dank deren unterschiedlicher Orientierungen bei unterschiedlichen Austrittswinkeln aus seiner Strömungsdynamik Ausgleichskräfte über das Auftreffglied gegen die Feder erzeugt. Da das Druckmittel für unterschiedliche Austrittswinkel unterschiedlich orientierte und weiter innen oder weiter außen liegende Prallflächen trifft, wird ein Ausgleichskraftverlauf erzielt, der die hubabhängig variierende Federkraft so kompensiert, daß auch trotz weiterer aus der Strömungsdynamik resultierender, variierender Kräfte der eingestellte Druck über der Menge konstant bleibt. Die unterschiedlich orientierten und weiter innen bzw. weiter außen liegenden Prallflächen nutzen die im herausschießenden Druckmittel enthaltene Energie trotz des variierenden Austrittswinkels jeweils optimal, um einen weitgehend der Federkennlinie angepaßten Ausgleichskraft-Verlauf zu erzeugen. Im Idealfall müßte die Querschnittskontur der Ringnut für jeden Austrittswinkel des Druckmittels eine optimale Energieumsetzung gewährleisten. Eine derartige Querschnittskontur ließe sich aber nur mit herstellungstechnisch hohem Aufwand bilden. Es reicht jedoch aus, nur mehrere unterschiedlich orientierte Prallflächen vorzusehen, beispielsweise nur zwei, die auf einen Austrittswinkel bei kleinem, z.B. dem kleinsten, Öffnungsgrad und einen Austrittswinkel bei einem größeren, z.B. dem größten Öffnungsgrad abgestimmt sind, jedoch auch bei anderen Austrittswinkeln eine noch ausreichende Energieumsetzung gewährleisten. Das durchschießende Druckmittel erzeugt in Abhängigkeit vom Durchtrittswinkel der Federkraft entgegenwirkende Kraftimpulse an derjenigen Prallfläche, die am besten zum jeweiligen Durchtrittswinkel paßt. Es ergibt sich bei der Änderung des Durchtrittwinkels ein relativ genau vorherbestimmter Kraftverlauf am Auftreffglied, um unerwünschte Fluktuationen des eingestellten Druckes zu vermeiden bzw. zu glätten. Mit bogenförmig konkaven Prallflächen ergeben sich günstige Strömungsverhältnisse bzw. Umlenkverhältnisse. Zwischen einer inneren und einer äußeren Prallfläche ist eine erhabene Verschneidungskante vorgesehen. Diese Verschneidungskante ermöglicht es, bei mittleren Durchtrittswinkeln beide Prallflächen zur Kraftübertragung zu nutzen.

Gemäß Anspruch 2 ist die äußerste Prallfläche auf sehr große Austrittswinkel ausgerichtet, bezogen auf die Achse.

Gemäß Anspruch 3 können bei sehr großen Mengenunterschieden über den Öffnungshub des Sicherheitsventils und/oder sehr großen Druckunterschieden zwischen dem zu begrenzenden Druck und dem Abströmdruck auch mehr als zwei Prallflächen vorgesehen werden, um einer großen Änderung des Austrittswinkels gerecht zu werden. Dabei trägt die Querschnittskontur der Ringnut dafür Sorge, daß das Druckmittel unabhängig vom jeweiligen Durchtrittswinkel in etwa die gleiche Strecke zurückzulegen hat, ehe es auf die Prallfläche trifft, so daß die im strömenden Druckmedium enthaltene Energie sehr gleichförmig umgewandelt wird. Eine weiter außenliegende Prallfläche kann sogar näher am Ventilsitz liegen als eine innenliegende Prallfläche.

Fertigungstechnisch günstig ist eine einem Kreisbogen folgende Form gemäß Anspruch 4.

Auf eine kostengünstige Herstellung für eine optimierte Kraftübertragung vom Druckmedium auf das Auftreffglied zielt die Positionsvorgabe gemäß Anspruch 5.

Gemäß Anspruch 6 sind bei optimierter Kraftübertragung für jeden Durchtrittswinkel günstige Umlenk- bzw. Abströmverhältnisse gewährleistet.

Herstellungstechnisch einfach ist gemäß Anspruch 7 jede Prallfläche mit demselben Drehstahl ausgedreht.

Anhand der Zeichnung wird eine Ausführungsform des Erfindungsgegenstandes erläutert. Es zeigen:
- Fig. 1: schematisch ein Sicherheitsventil,
- Fig. 2: eine Diagramm zum Arbeitsverhalten des Sicherheitsventils gemäß Fig. 1 (d.h. Druck über Menge),
- Fig. 3: einen Längsschnitt durch das Sicherheitsventil von Fig. 1 in zwei unterschiedlichen Betriebsstellungen, und
- Fig. 4: einen vergrößerten Schnitt eines in Fig. 3 durch einen strichpunktierten Kreis hervorgehobenen Bereiches.

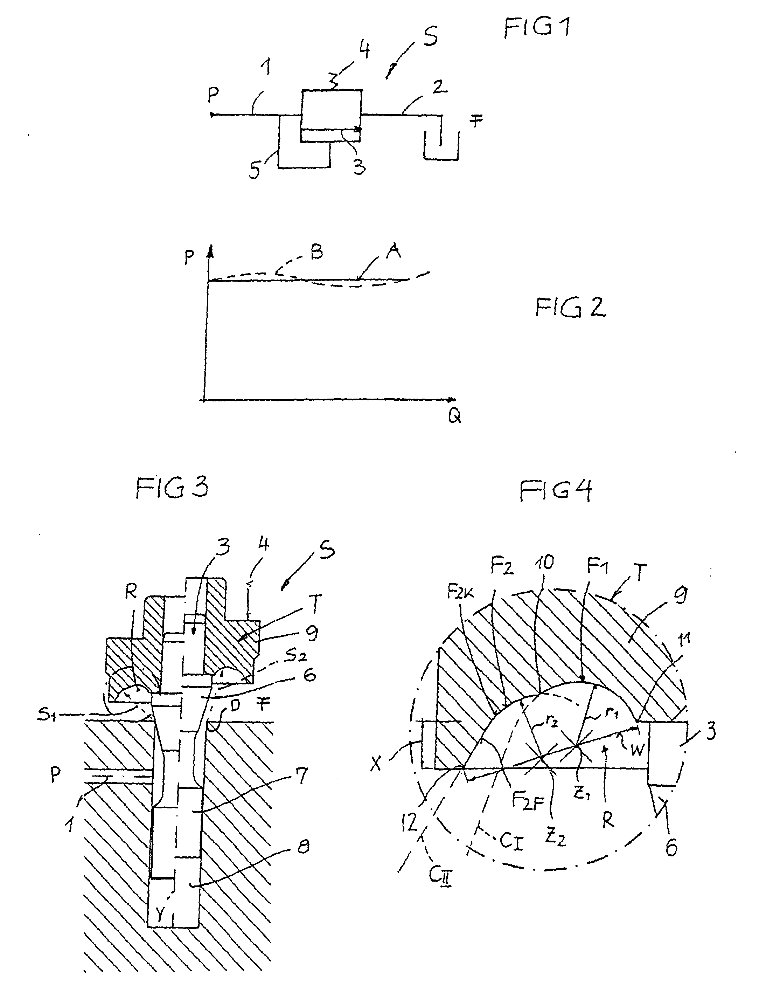

In Fig. 1 ist ein Sicherheitsventil S zwischen einer einen zu begrenzenden Druck P enthaltenden Leitung 1 und einer zu einem Tank T führenden Leitung 2 vorgesehen. Das Sicherheitsventil S enthält ein Schließelement 3, das durch eine Feder 4 im Schließsinn und durch einen über eine Vorsteuerleitung 5 aus der Leitung 1 abgeleiteten Druck in Öffnungsrichtung beaufschlagt wird. Durch Abstimmung zwischen der Beaufschlagungsfläche des Schließelementes für den Vorsteuerdruck in der Leitung 5 und der Kraft und der Kennlinie der Feder 4 wird der Druck P auf einen vorbestimmten Wert begrenzt, bei dem das Sicherheitsventil S öffnet und Druckmittel aus der Leitung 1 in die Leitung 2 abströmen läßt.

In Fig. 2 ist der Druck P über der Menge Q gezeigt. Erstrebenswert ist ein zumindest weitgehend linearer Verlauf (Kurve A) des Druckes P über der Menge. Bei aus dem Stand der Technik bekannten Sicherheitsventilen dieser Bauweise ergeben sich Fluktuationen des zu begrenzenden Druckes (gestrichelte Kurve B), vermutlich aufgrund der sich über den Federverformungshub ändernden Kraft der Feder 4 und aufgrund der sich in Abhängigkeit vom Öffnungsgrad des Sicherheitsventils bzw. der Menge ändernden Strömungsdynamik des austretenden Druckmittels. Mittels der zu den Fig 3 und 4 erläuterten Ausbildung des Sicherheitsventils S (eines federbelasteten Sitzventils) werden Fluktuationen der Kurve B weitestgehend vermieden und wird eine Druck-Kurve entsprechend der Kurve A auf baulich und herstellungstechnisch einfache Weise erreicht.

Das Schließelement 3 in den Fig. 3 und 4 ist ein Kolben mit einer kegeligen Sitzfläche 6, die mit einem Ventilsitz D zusammenwirkt, um unter der Beaufschlagungskraft der Feder 4 die Verbindung zwischen der Leitung 1 (der Druckseite P) und dem Tank F in der Schließstellung zu blockieren. Das Schließelement 3 kann einen Kolbenfortsatz 7 in einer an den Ventilsitz D angrenzenden Kammer 8 aufweisen, der mit dem Druck in der Leitung 1 beaufschlagbar ist, und zwar entgegengesetzt zur Kraft der Feder 4 (entsprechend der Vorsteuerleistung 5 in Fig. 1).

Am Schließelement 3 ist ein Auftreffglied T angebracht, beispielsweise in Form eines aufgeschobenen Federwiderlagers mit ringförmiger Gestalt. Das Auftreffglied T könnte aber auch einstückig am Schließelement angeformt sein, z.B. in Form eines Bundes. An der dem Ventilsitz D zugewandten Seite des Auftreffgliedes T ist eine zur Achse Y des Schließelementes 3 konzentrische Ringnut R eingeformt, deren Querschnittskontur anhand von Fig. 4 im Detail erläutert werden wird. In Fig. 3 ist angedeutet, daß je nach Öffnungsgrad des Sicherheitsventils S das austretende Druckmittel unterschiedliche Austrittswinkel in Bezug auf die Achse Y hat. Beispielsweise ist bei kleinem Öffnungsgrad der Austrittswinkel S1 mit der Achse Y erheblich größer als bei größerem Öffnungsgrad, bei dem der Austrittswinkel S2 entsteht. In Abhängigkeit von der Ausbildung der Dichtfläche 6 und des Ventilsitzes D kann der Durchtrittswinkel über den Öffnungshub beträchtlich variieren. Er kann bei kleinem Öffnungsgrad klein, und bei größerem Öffnungsgrad größer sein, also umgekehrt wie in Fig. 3 angedeutet. Die Ringnut R ist so dimensioniert und angeordnet, daß das durchschießende Druckmittel in die Ringnut R eintritt und darin umgelenkt wird. Dabei wird aufgrund der Strömungsdynamik eine Kraft auf das Auftreffglied T übertragen, die der Federkraft 4 entgegenwirkt und dazu genutzt wird, die Kurve A in Fig. 2 zu erzielen.

In Fig. 4 hat die Ringnut R eine Querschnittskontur, die bestimmt ist durch zwei aneinander anschließende Prallflächen F1 und F2. Die innere Prallfläche F1 beginnt an einem Innenrand 11 der Ringnut R und folgt einen Kreisbogen mit dem Radius r1 bis zu einer erhabenen Verschneidungskante 10 mit der äußeren Prallfläche F2, die angrenzend an die Verschneidungskante 10 einem Kreisbogen mit dem Radius r2 folgt (Flächenbereich F2K), ehe sie mit einem ebenen und zum Kreisbogen tangentialen Flächenabschnitt F2F zu einem Außenrand 12 der Ringnut R führt. Die lichten Weiten beider Prallflächen F1 und F2 sind einander in etwa gleich. Auch die Radien r1 und r2 können gleich sein und betragen annähernd etwa 35% der lichten Weite W der Ringnut R. Der Innenrand 11 ist um ein Maß X weiter entfernt von der Dichtfläche 6 als der Außenrand 12 und zwar in Richtung der Achse Y. Das Maß X kann beispielsweise ca. 25% der lichten Weite W der Ringnut R betragen. Die innere Prallfläche F1 ist so geformt und angeordnet, daß eine Sehne zwischen der Verschneidungskante 10 und dem Innenrand 11 mit der Achse Y einen erhabenen Winkel > 90° einschließt. Die Prallfläche F2 ist hingegen so angeordnet und ausgebildet, daß eine den Außenrand 12 mit der Verschneidungskante 10 verbindende Sehne mit der Achse Y einen spitzen Winkel < 90° einschließt. Außerdem befindet sich die äußere Prallfläche F2 in Richtung der Achse Y näher bei der Dichtfläche 6 als die innere Prallfläche F1. Das Kreisbogenzentrum Z2 der Prallfläche F2 (bogenförmiger Flächenteil F2K) liegt in Richtung der Achse Y näher an der Dichtfläche 6, als das Kreisbogenzentrum Z1 der inneren Prallfläche F1.

Es wäre denkbar, mehr als zwei unterschiedlich orientierte Prallflächen von innen nach außen aufeinanderfolgend anzuordnen. Ferner braucht die Kontur jeder Prallfläche F1 nicht einem Kreisbogen zu folgen, sondern es könnten auch andere Bogenkrümmungen gewählt werden oder ein Verlauf, der aus aneinander anschließenden Geraden besteht. Der innenrand 11 befindet sich zweckmäßigerweise näher bei der Achse Y als die gedachte Verlängerung der Dichtfläche 6, so daß mit einem kleinen Durchtrittswinkel in die Ringnut R einschießendes Druckmittel nicht auf den Innenrand 11 trifft, sondern in die Prallfläche F1, der entlang das Druckmittel umgelenkt und zum Abströmen nach außen gezwungen wird. Bei einem mittleren Durchtrittswinkel kann sich das Druckmittel an der Verschneidungskante 10 in beide Prallflächen F1 und F2 verteilen. Bei einem größeren Durchtrittswinkel beaufschlagt das Druckmittel dann hauptsächlich die äußere Prallfläche F2.

Beim Auftreffen des Druckmittels auf die Prallflächen F1 und/oder F2 wird die Strömungsenergie (kinetische Energie) zumindest zu einem überwiegenden Teil in das Auftreffglied T übertragen, in Kraftimpulse umgewandelt, und dazu benutzt, der Kraft der Feder 4 in Richtung der Achse Y entgegenzuwirken. Durch die gewählte Querschnittskontur der Ringnut wird ein vorbestimmter Kraftverlauf erzeugt, der dem sich ändernden Federwiderstand der Feder 4 über den Federverformungshub kompensiert, und auch die sich mit dem Öffnungsgrad des Sicherheitsventils ändernde Strömungsdynamik so berücksichtigt, daß die Kurve A in Fig. 2 (P konstant über der Menge Q) erzielt wird.

Das Auftreffglied T kann ein einfaches Drehteil sein, in dem die Ringnut R mit einem Drehstahl C (Fig. 4) geformt wird, der in zwei unterschiedlichen Arbeitspositionen eingesetzt wird (CI und CII), um die beiden Prallflächen F1 und F2 in unterschiedlichen Drehschritten zu formen.

Die Anordnung der Prallflächen F1 und F2 ist zweckmäßigerweise gewählt, daß das Druckmittel abhängig vom Öffnungsgrad des Sicherheitsventils und dem Durchtrittswinkel jeweils in etwa den gleichen Weg vom Ventilsitz D bis zur Prallfläche F1 oder F2 zurücklegt und die jeweilige Prallfäche mit einem optimalen Auftreffwinkel erreicht. Zu diesem Zweck sind die Prallflächen F1 und F2 unterschiedlich weit vom Ventilsitz in Richtung der Achse Y entfernt und relativ zur Achse Y bzw. zum Dichtsitz unterschiedlich orientiert. Der Außenrand 12 der Ringnut R sollte so weit von der Achse Y entfernt sein, daß das Druckmittel auch beim größten auftretenden Durchtrittswinkel noch die Ringnut R beaufschlagt.

Um einen linearen Druckverlauf über der Menge zu erzielen, und auch im Hinblick auf eine einfache und kostengünstige Fertigung des Sicherheitsventils bzw. des Auftreffgliedes ist die Herzkurve als Querschnittskontur der Ringnut gemäß Fig. 4 besonders zweckmäßig.

## Patentansprüche

1. Sicherheitsventil (S) für die Hochdruckhydraulik, mit einem druckabhängig gegen Federkraft (4) relativ zu einem Ventilsitz (D) bewegbaren Schließelement (3) mit kegeliger oder balliger Sitzfläche (6), wobei der Ventilsitz (D) zwischen einer Druckseite (P) und einer Abströmseite (F) angeordnet ist, und mit einem an der Abströmseite am Schließelement (3) angeordneten Auftreffglied (T), das eine Ringnut (R) aufweist, die mit ihrer offenen Seite dem Ventilsitz (D) zugewandt ist, wobei die Querschnittskontur der Ringnut (R) aus mehreren unterschiedlich orientierten, inneren und äußeren Prallflächen (F1, F2) zusammengesetzt ist, die in Richtung von der Achse (Y) des Schließelements (3) nach außen aufeinanderfolgen, und die offene Seite einer inneren Prallfläche (F1) annähernd radial und die offene Seite einer weiter außenliegenden Prallfläche (F2) von außen zum Ventilsitz (D) zielt und zur Achse (Y) schräggestellt ist, **dadurch gekennzeichnet, daß** jede Prallfläche (F1, F2) im Querschnitt bogenförmig konkav ist, daß eine innere Prallfläche (F1) und eine äußere Prallfläche (F2) gemeinsam eine erhabene Verschneidungskante (10) bilden, und daß die äußere Prallfläche (F2) zum Außenrand (12) der Ringnut (R) mit einem ebenen Flächenabschnitt (F2F) tangential zum Bogen ausläuft.

2. Sicherheitsventil nach Anspruch 1, **dadurch gekennzeichnet, daß** bei mehr als zwei Prallflächen (F1, F2) die äußerste Prallfläche mit ihrer offenen Seite am stärksten schräg zum Ventilsitz (D) bzw. zur Achse (Y) weist.

3. Sicherheitsventil nach Anspruch 1, **dadurch gekennzeichnet, daß** der Innenrand (11) der Ringnut (R) in Richtung der Achse (Y) weiter von der Dichtfläche (6) bzw. dem Ventilsitz (D) entfernt ist als der Außenrand (12), vorzugsweise um ca. 25% der Ringnutweite (W), und daß jede äußere Prallfläche (F2) in Richtung der Achse (Y) näher an der Dichtfläche (6) bzw am Dichtsitz (D) liegt als jede innere Prallfläche (F1).

4. Sicherheitsventil nach Anspruch 1, **dadurch gekennzeichnet, daß** der Querschnitt jeder Prallfläche (F1, F2) einem Kreisbogen mit einem Radius (r1, r2) folgt.

5. Sicherheitsventil nach Anspruch 4, **dadurch gekennzeichnet, daß** das Zentrum (Z1) des Kreisbogens der inneren Prallfläche (F1) näher bei der Achse (Y) liegt als das Zentrum (Z2) des Kreisbogens der äußeren Prallfläche (F2), und daß das Zentrum (Z2) des Kreisbogens der äußeren Prallfläche (F2) in Richtung der Achse (Y) näher bei der Sitzfläche (6) bzw. beim Dichtsitz (D) liegt als das Zentrum (Z1) des Kreisbogens der inneren Prallfläche (F1).

6. Sicherheitsventil nach Anspruch 1, **dadurch gekennzeichnet, daß** die Radien (r1, r2) der beiden Kreisbögen in etwa gleich sind, und, vorzugsweise, weniger als die Hälfte der Weite (W) der Ringnut (R) und z. B. etwa je 35% der Weite (W) betragen.

7. Sicherheitsventil nach wenigstens einem der vorhergehenden Ansprüche, **dadurch gekennzeichnet, daß** die Ringnut (R) mit ihren Prallflächen durch Ausdrehen des Auftreffglieds (T) mit einem rund konturierten Drehstahl (C) in zwei oder mehr Drehschritten (CI, CII) gebildet ist.

## Claims

1. Safety valve (S) for high-pressure hydraulics, having a closing element (3) which can be moved as a function of pressure against spring force (4) relative to a valve seat (D) and has a conical or crowned seating face (6), the valve seat (D) being arranged between a pressure side (P) and an outflow side (F), and having an impingement member (T) which is arranged on the outflow side on the closing element (3) and has an annular groove (R) which, with its open side, faces the valve seat (D), the cross-sectional contour of the annular groove (R) being composed of a plurality of differently oriented, inner and outer reflecting surfaces (F1, F2) which follow one another outwards in a direction from the axis (Y) of the closing element (3), and the open side of an inner reflecting surface (F1) being directed approximately radially and the open side of a reflecting surface (F2) lying further on the outside being directed from the outside towards the valve seat (D) and being inclined relative to the axis (Y), **characterized in that** each reflecting surface (F1, F2) is concavely curved in cross section, **in that** an inner reflecting surface (F1) and an outer reflecting surface (F2) together form a raised intersection edge (10), and **in that** the outer reflecting surface (F2) runs out to the outer margin (12) of the annular groove (R) with a plane surface section (F2F) tangentially to the curve.

2. Safety valve according to Claim 1, **characterized in that**, if there are more than two reflecting surfaces (F1, F2), the outermost reflecting surface, with its open side, points obliquely to the greatest extent towards the valve seat (D) or towards the axis (Y).

3. Safety valve according to Claim 1, **characterized in that** the inner margin (11) of the annular groove (R), in the direction of the axis (Y), is at a greater distance from the sealing face (6) or the valve seat (D) than the outer margin (12), preferably by about 25% of the annular groove width (W), and **in that** each outer reflecting surface (F2), in the direction of the axis (Y), is closer to the sealing face (6) or the sealing seat (D) than each inner reflecting surface (F1).

4. Safety valve according to Claim 1, **characterized in that** the cross section of each reflecting surface (F1, F2) follows a circular arc with a radius (r1, r2).

5. Safety valve according to Claim 4, **characterized in that** the centre (Z1) of the circular arc of the inner reflecting surface (F1) is closer to the axis (Y) than the centre (Z2) of the circular arc of the outer reflecting surface (F2), and **in that** the centre (Z2) of the circular arc of the outer reflecting surface (F2), in the direction of the axis (Y), is closer to the seating face (6) or the sealing seat (D) than the centre (Z1) of the circular arc of the inner reflecting surface (F1).

6. Safety valve according to Claim 1, **characterized in that** the radii (r1, r2) of the two circular arcs are approximately the same and are preferably less than half the width (W) of the annular groove (R) and are each, for example, about 35% of the width (W).

7. Safety valve according to at least one of the preceding claims, **characterized in that** the annular groove (R), with its reflecting surfaces, is formed by turning out the impingement member (T) in two or more turning steps (CI, CII) with a turning tool (C) of round contour.

## Revendications

1. Soupape de sûreté (S) pour l'hydraulique à haute pression, présentant un obturateur (3) à surface de siège (6) conique ou sphérique, mobile en fonction de la pression par rapport à un siège de soupape (D) contre une force élastique (4), le siège de soupape (D) étant disposé entre un côté pression (P) et un côté sortie (F) et présentant, disposé côté sortie sur l'obturateur (3), un organe d'impact (T) qui présente une rainure annulaire (R) qui est orientée par son côté ouvert vers le siège de soupape (D), le contour de section transversale de la rainure annulaire (R) étant constitué de plusieurs surfaces de choc (F1, F2) intérieures et extérieures, orientées différemment, qui se succèdent vers l'extérieur dans la direction de l'axe (Y) de l'obturateur (3), et le côté ouvert d'une surface de choc intérieure (F1) donnant sur le siège de soupape (D) approximativement radialement et le côté ouvert d'une autre surface de choc située plus à l'extérieur (F2) donnant sur le siège de soupape (D) depuis l'extérieur et étant positionné incliné par rapport à l'axe (Y), **caractérisé en ce que** chaque surface de choc (F1, F2) est de section incurvée concave, **en ce qu'**une surface de choc intérieure (F1) et une surface de choc extérieure (F2) forment ensemble une arête d'intersection (10) saillante, et **en ce que** la surface de choc extérieure (F2) s'étend vers le bord extérieur (12) de la rainure annulaire (R) par une section de surface plan (F2F) tangentiellement par rapport à l'arc.

2. Soupape de sûreté selon la revendication 1, **caractérisée en ce que** dans le cas de plus de deux surfaces de choc (F1, F2), la surface de choc la plus extérieure, par son côté ouvert, donne avec l'inclinaison la plus forte, sur le siège de soupape (D) ou sur l'axe (Y).

3. Soupape de sûreté selon la revendication 1, **caractérisée en ce que** le bord intérieur (11) de la rainure annulaire (R) dans la direction de l'axe (Y) est plus éloigné de la surface d'étanchéité (6) ou du siège de soupape (D) que le bord extérieur (12), de préférence d'environ 25% de la largeur (W) de la rainure annulaire, et **en ce que** chaque surface de choc extérieure (F2) dans la direction de l'axe (Y) est située plus proche de la surface d'étanchéité (6) ou du siège d'étanchéité (D) que chaque surface de choc (F1) intérieure.

4. Soupape de sûreté selon la revendication 1, **caractérisée en ce que** la section transversale de chaque surface de choc (F1, F2) suit un arc de cercle d'un rayon (r1, r2).

5. Soupape de sûreté selon la revendication 4, **caractérisée en ce que** le centre (Z1) de l'arc de cercle de la surface de choc intérieure (F1) est situé plus proche de l'axe (Y) que le centre (Z2) de l'arc de cercle de la surface de choc extérieure (F2), et **en ce que** le centre (Z2) de l'arc de cercle de la surface de choc extérieure (F2) dans la direction de l'axe (Y) est situé plus proche de la surface de siège (6) ou du siège d'étanchéité (D) que le centre (Z1) de l'arc de cercle de la surface de choc intérieure (F1).

6. Soupape de sûreté selon la revendication 1, **caractérisée en ce que** les rayons (r1, r2) des deux arcs de cercle sont environ égaux, et de préférence s'élèvent à moins de la moitié de la largeur (W) de la rainure annulaire (R) et par exemple respectivement à environ 35 % de la largeur (W).

7. Soupape de sûreté selon l'une des revendications précédentes, **caractérisée en ce que** la rainure annulaire (R) par ses surfaces de choc est formée en deux étapes de tournage (CI, CII) ou plus par tournage de l'organe d'impact (T) avec un tour (C) de contour rond.
